# EUROPÄISCHE PATENTSCHRIFT

(11) **EP 0 982 338 B1**
(45) Veröffentlichungstag und Bekanntmachung des Hinweises auf die Patenterteilung: **27.04.2005**
(21) Anmeldenummer: 99116469.0
(22) Anmeldetag: 21.08.1999
(51) Int. Cl.: C08G 63/16, C08G 18/42, C08J 11/22

(54) **Verfahren zur Herstellung von Polyesterpolyolen**
Process for the preparation of polyester polyols
Procédé de préparation de polyester polyols

(30) Priorität: 27.08.1998 DE 19838991
(43) Veröffentlichungstag der Anmeldung: 01.03.2000
(73) Patentinhaber: BASF AKTIENGESELLSCHAFT, 67056 Ludwigshafen (DE)
(72) Erfinder: Berger, Elke, 01968 Senftenberg (DE); Tischer, Gerlinde, 01945 Ruhland (DE); Reese, Hans-Jürgen, 82140 Olching (DE); Güttes, Bernd, 03238 Sallgast (DE)

(56) Entgegenhaltungen:
- EP-A- 0 248 570
- EP-A- 0 821 019
- US-A- 4 439 546

## Beschreibung

Die Erfindung betrifft ein Verfahren zur Herstellung von Polyesterpolyolen auf Basis von Alkoholen und Carbonsäuren und/oder Carbonsäurederivaten sowie Polyalkylenterephthalat sowie die Verwendung dieser Polyesterpolyole zur Herstellung von Polyurethanen (PUR), insbesondere zum Einsatz als Bau- und Montageschäume.

Polyesterpolyole stellt man bekannterweise aus Polycarbonsäuren und mehrfunktionellen Alkoholen durch Kondensation in der Schmelze her, wobei üblicherweise Katalysatoren, wie z. B. Zinn- oder Titanverbindungen, eingesetzt werden. Verfahren zur Herstellung und Eigenschaften der Polyesterpolyole für PUR werden in zahlreichen Patent-und Literaturveröffentlichungen beschrieben.

Beispielhaft genannt sei das Kunststoffhandbuch, BandVII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel.

Es ist auch bekannt, zur Herstellung von Polyesterpolyolen Polyalkylenterephthalate (PAT), insbesondere Polyethylenterephthalat (PET)- und Polybutylenterephthalat (PBT)-Recyclate, mitzuvenvenden. Aufgrund des immer stärker werdenden Anfalls von PET-Abfall gibt es neben der Zerkleinerung mit anschließender neuer Formgebung auch Verfahren, diese Abfälle chemisch aufzuarbeiten und neuen Anwendungsgebieten zuzuführen. Bisher ist es jedoch nicht gelungen, niedrigviskose Polyesteralkohole unter Einsatz von PAT in einer Stufe zu synthetisieren, die dann in üblichen Abmischungen zur PUR-Herstellung nicht zu Ausfällungen führen.

So wird z.B. im EP-A-0710686 in mehreren Schritten PET mit Diethylenglykol umgeestert und durch Abdestillation von Diol die gewünschte OH-Zahl eingestellt. Das entstehende Produkt ist jedoch eine Suspension mit dem großen Nachteil, daß Sedimentationen auftreten und in wasserhaltigen PUR-Abmischungen Flockenbildung zu beobachten ist. Andere Schriften (DE-A-4227299, DE-A-19534276) haben die teilweise oder vollständige Aufspaltung in die Ausgangskomponenten zum Ziel, wofür sie aber mehrere Schritte benötigen. Weiterhin ist eine aufwendige Reinigung der Spaltprodukte notwendig, um diese wieder für neue Synthesen einsetzen zu können. Auch DE-A-3435014 hat den Nachteil, nur über mehrere Stufen zu einer polyolhaltigen Flüssigkeit zu kommen. Das in DE-A-19630283 dargestellte Verfahren ist ebenfalls ein Mehrstufenverfahren, in dem das PAT während der ersten Stufe in einem weiteren Teilschritt erst zu einem späteren Zeitpunkt während der bereits erfolgenden Kondensation zugegeben wird und in mindestens einem weiteren Schritt der Zusatz katalytisch wirkender Substanzen erfolgt. Das in der DE-Anmeldung Nr. 19748142.6 beschriebene Verfahren führt durch den hohen Anteil monofunktioneller Carbonsäuren zu einem vorzeitigen Abbruch der Polykondensation. Der entstehende Polyesteralkohol besitzt deshalb einen hohen Anteil inerter und/oder monofunktioneller Esterverbindungen. Da Polyesteralkohole hauptsächlich in der PUR-Herstellung eingesetzt werden, ist der PUR-Aufbau folglich ebenfalls ungenügend. Die gewünschten anwendungstechnischen Parameter der PUR-Produkte werden nicht erreicht oder es entstehen von vornherein nur fehlstellenbehaftete PUR-Schäume, falls eine Reaktion in ausreichendem Maß überhaupt stattfindet.

In EP-A-0220793 wird die Systemverträglichkeit von Polyolblends nur über den Einbau von monofunktionellen hydrophoben Verbindungen, die einen Kettenabbruch bewirken, bzw. Polyethern erreicht und dies auch nur für wasserfreie Systeme.

Der vorliegenden Erfindung lag die Aufgabe zugrunde, durch ein geeignetes Verfahren und eine geeignete Rohstoffauswahl einen hydroxylfunktionellen Polyester unter Einsatz von PAT herzustellen, wobei nur eine Verfahrensstufe benötigt wird und das entstehende Polyesterpolyol eine niedrige Viskosität aufweist und im PUR-System, insbesondere in dem als Polyolkomponente bezeichneten, das Polyesterpolyol enthaltenden, polyolischen Gemisch nicht zu Ausflockungen führt sowie einen gleichmäßigen Polymeraufbau mit schaumtechnischen Vorteilen im ausgehärteten PUR-System oder im isocyanatterminierten Prepolymer bei dessen Verwendung, insbesondere bei der Herstellung von Bau- und Montageschäumen, gewährleistet.

Diese Aufgabe wurde erfindungsgemäß dadurch gelöst, daß für die Polykondensation eine Rohstoffkombination eingesetzt wird, die neben dem PAT ein Gemisch (I) aus einem oder mehreren Alkoholen mit mindestens zwei Hydroxylgruppen und 30 bis 60 Masse-% einer oder mehrerer linearer und/oder cyclischer Esterverbindungen sowie ein Gemisch (II) aus 10 bis 33 Masse-% Bernsteinsäure, 39 bis 55 Masse-% Glutarsäure und 18 bis 45 Masse-% Adipinsäure enthält, wobei das Verhältnis der Bestandteile a) zu b) zu c) in Masse-% (50 bis 60) zu (25 bis 40) zu (15 bis 25) beträgt, wobei sich die Anteile auf 100 Masse-% ergänzen.

Gegenstand der Erfindung ist demzufolge ein Verfahren zur Herstellung von Polyesterpolyolen auf Basis von Alkoholen und Carbonsäuren und/oder Carbonsäurederivaten sowie Polyalkylenterephthalat, dadurch gekennzeichnet, dass für die Polykondensation eine Rohstoffkombination, enthaltend
a) ein Gemisch (I) aus einem oder mehreren Alkoholen mit mindestens zwei Hydroxylgruppen und 30 bis 60 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen,
b) ein Gemisch (II) aus 10 bis 33 Masse-% Bernsteinsäure, 39 bis 55 Masse-% Glutarsäure und 18 bis 45 Masse-% Adipinsäure und
c) Polyalkylenterephthalat,
eingesetzt wird und das Verhältnis der Bestandteile a) zu b) zu c) in Masse-% (50 bis 60) zu (25 bis 40) zu (15 bis 25) beträgt, wobei sich die Anteile auf 100 Masse-% ergänzen.

Gegenstände der Erfindung ist weiterhin die verwendung der nach diesem Verfahren hergestellten Polyesterpolyole zur Herstellung von PUR, insbesondere Bau- und Montageschäumen.

Unter dem allgemeinen Begriff Bau- und Montageschäume sind Schäume zu verstehen, die als Schaumsysteme, insbesondere zur Montage von Türen und Fenstern sowie zum Ausfüllen von Rohrdurchbrüchen und anderen bautechnisch bedingten Hohlräumen, angeboten werden. Besonders geeignet ist das erfindungsgemäße Polyesterpolyol für den Einsatz in den weiter unten beschriebenen Systemformulierungen, die trotz unterschiedlichen Aufbaus die Eigenschaftsvorteile des neuen Polyesterpolyols in gleichem Maße nutzen. So weist das erfindungsgemäße Polyesterpolyol im Vergleich mit bekannten Polyesterpolyolen ein verbessertes Schäumverhalten, ein verbessertes Aushärteverhalten, u.a. durch den hydrophilen Charakter, sowie eine verbesserte Dimensionsstabilität des fertigen Schaumes auf.

Als Bau- und Montageschäume sind im Rahmen dieser Erfindung insbesondere Aerosolschäume auf Basis einkomponentiger PUR-Systeme sowie Kartuschenschäume auf Basis zweikomponentiger PUR-Systeme zu verstehen.

Es war überraschend und in keiner Weise vorhersehbar, daß hochmolekulare PAT-Abfälle, wie z. B. PET oder PBT, unter Zugabe eines Diol/Ester-Gemisches (I) und des Dicarbonsäure-Gemisches (II) zu niedrigviskosen Polyesterpolyolen mit verminderter Kristallisationsneigung in einem Schritt umgesetzt werden können. Vielmehr war zu erwarten gewesen, daß durch gleichzeitige Vorlage hochmolekularen PAT's neben monomeren Esterbausteinen eine stetige Phasentrennung erhalten bleibt, eine chemische Kombination aller Reaktionspartner also nicht stattfindet. Weiterhin war nicht vorherzusehen, daß der Einsatz von cyclischen Estern, z.B. Diethylenglykoladipat, die Kristallisationsneigung stark vermindert.

Nach diesem Verfahren entsteht ein hochmolekulares, niedrigviskoses Polyesterpolyol, das auch über Wochen selbst oder im Gemisch als polyolische PUR-Systemkomponente stabil bleibt. Es weist auch in wasserhaltigen Abmischungen mit weiteren Polyolen, Katalysatoren und Zusatzstoffen keine Phasenseparierungen auf und flockt nicht aus.

Es war weiterhin überraschend, daß sich mit diesem einstufigen Verfahren alle verfügbaren PAT-Produkte verlustlos zu homogenen Polyolen verarbeiten lassen. Die aus diesen Polyolen hergestellten PUR, insbesondere Bau- und Montageschäume, sind von hoher Qualität. Sie weisen einen regelmäßigen feinzelligen PUR-Aufbau auf und sind problemlos sowohl als Einkomponenten- als auch als Zweikomponentensystem zu verarbeiten. Die physiko-mechanischen Kennwerte entsprechen den speziellen Anforderungen an Bau- und Montageschäume.

Ein besonderer Vorteil der erfindungsgemäß hergestellten Polyesterpolyole besteht in der vielseitigen Einsetzbarkeit in Systemkomponenten sowohl für die Einkomponentenverarbeitung zu Aerosolschaum als auch in Zweikomponentensystemen und deren Verarbeitung zu Kartuschenschaum. Neben gutem Aushärteverhalten, einer hohen Standfestigkeit und einer vorteilhaften Dimensionsstabilität führt das erfindungsgemäße Produkt im Aerosolschaum zu verstärktem Frothverhalten und zu einer vorteilhaften Ausbeute an Schaumvolumen, bezogen auf die Menge an Einsatzmischung. Bei den Kartuschenschäumen ist eine im Vergleich zu üblichen Schäumen sehr hohe Dimensionsstabilität (Schrumpf des Schaumes von kleiner 1%) als vorteilhafte Wirkung des Polyesterpolyols festzustellen.

Es wurde somit ein wirtschaftliches Verfahren zur Herstellung von Polyesterpolyolen gefunden, die sich zu speziellen PUR, insbesondere Aerosol- und Kartuschenschäumen, verarbeiten lassen.

Zu den für die erfindungsgemäße Herstellung der Polyesterpolyole verwendeten Ausgangsstoffen ist folgendes auszuführen:

Das Gemisch (I) besteht aus einem oder mehreren Alkoholen mit mindestens zwei Hydroxylgruppen und 30 bis 60 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen,

Als lineare Alkandiolester kommen in Betracht: Alkandiolester von aliphatischen C₂ - bis C₄-Dicarbonsäuren mit einem mittleren Estermolekulargewicht von bis zu 500. Bevorzugt eingesetzt werden Diethylenglykoladipate.

Als cyclische Esterverbindungen kommen in Betracht: C₂ₙ-Diol-Ester aliphatischer C₂ₙ-Dicarbonsäuren (n=1 bis 3). Bevorzugt werden Adipinsäureester, insbesondere Diethylenglykoladipat.

Üblicherweise wird als Gemisch (I) eine Zusammensetzung von 40 bis 70 Masse-% C₂ - bis C₆-Diol, bevorzugt Diethylenglykol, und 30 bis 60 Masse-%, bevorzugt 32 bis 55 Masse-%, eines linearen und/oder cyclischen Esters, insbesondere Diethylenglykoladipat, eingesetzt.

Das Gemisch (II) besteht erfindungsgemäß aus 10 bis 33 Masse-% Bernsteinsäure, 39 bis 55 Masse-% Glutarsäure und 18 bis 45 Masse-% Adipinsäure. Insbesondere bewährt hat sich ein Gemisch aus 17 bis 30 Masse-% Bernsteinsäure, 39 bis 47 Masse-% Glutarsäure und 25 bis 38 Masse-% Adipinsäure.

Daneben können in geringen Mengen, höchstens 5 Masse-%, bezogen auf den Reaktionsansatz, weitere Säurekomponenten, beispielsweise weitere üblicherweise verwendete Dicarbonsäuren, insbesondere C₂- bis C₄-Dicarbonsäuren, wie Phthalsäure, Itaconsäure, Isophthalsäure und/oder deren Anhydride mitverwendet werden.

Als PAT können alle verfügbaren PAT-Produkte einzeln oder im Gemisch untereinander eingesetzt werden. Vorzugsweise kommen PET und/oder PBT in Frage.

Insbesondere werden PAT-Abfälle, wie PBT- und PET-Granulate aus dem Recycling von PBT- bzw. PET-Teilen, -Filmen, -Fasern und -Folien oder auch PBT- bzw. PET-Abfälle der Flaschenproduktion, eingesetzt.

Die Bestandteile a) [Gemisch (I)], b) [Gemisch (II)] und c) [PAT] werden dabei in einem Verhältnis von a) : b) : c) von (50 bis 60) : (25 bis 40) : (15 bis 25), Angaben jeweils in Masse-%, eingesetzt, wobei sich die Anteile auf 100 Masse-% ergänzen. Bevorzugt wird ein Verhältnis von a) : b) : c) von (50 bis 59) : (25 bis 35) : (15 bis 25).

Die Herstellung des erfindungsgemäßen Polyesterpolyols erfolgt vorzugsweise gezielt in einem Syntheseschritt. Die Polykonäensation wird dabei nach Vorlage aller Ausgangsstoffe bei Temperaturen von 180 bis 250°C unter Normaldruck solange durchgeführt, bis ein homogenes Reaktionsgemisch entsteht. Danach wird unter vermindertem Druck die Veresterung bis zum Erreichen der angestrebten Kenndaten weitergeführt.

Nach einer besonders bevorzugten Ausführungsform werden alle Rohstoffe (PAT, Gemisch (I) und Dicarbonsäuregemisch (II)) in ein temperierbares und evakuierbares Reaktionsgefäß, welches mit einem Rührwerk und einer Kolonne zur Abtrennung des entstehenden Reaktionswassers verbunden ist, gegeben und anschließend das Gemisch aufgeheizt. Nach Erreichung einer Temperatur von 180 bis 250°C, bevorzugt 220 bis 240°C, erfolgt zunächst unter Normaldruck die Lösung aller Rohstoffe zu einer klaren homogenen Phase unter gleichzeitigem Beginn der Veresterungsreaktion, die dann unter einem reduzierten Druck von 0,001 bis 0,05 MPa, bevorzugt 0,0015 bis 0,02 MPa, bis zur Erreichung der gewünschten Produktparameter fortgeführt wird.

Üblicherweise erfolgt die Kontrolle des Umsatzes über die Bestimmung der Säurezahl. Die angestrebten Produktparameter richten sich nach dem Einsatzgebiet des Polyesteralkohols und werden über die Rohstoffe, ihre Funktionalität und ihren Verzweigungsgrad sowie ihr molares Verhältnis gesteuert. So haben sich z. B. für Bau- und Montageschäume Säurezahlen unter 2 mg KOH/g und OH-Zahlen im Bereich 35 bis 75 mg KOH/g bewährt.

Die Reaktion kann unter Zusatz der für die Veresterung üblichen metallorganischen Katalysatoren beschleunigt werden. Als katalytisch wirksame Substanzen bei der Kondensationsreaktion werden bevorzugt Titan- und/oder Zinnverbindungen und/oder Lewissäuren in Mengen bis 1000 ppm, beispielsweise Titantetrabutylat, Zinn(II)-octoat oder Zinn(II)-chlorid, eingesetzt. Besonders bevorzugt verwendet werden Titantetrabutylat und Zinn (II)-octoat.

Die erfindungsgemäß hergestellten Polyesterpolyole weisen eine Funktionalität von mindestens 2, vorzugsweise von 2 bis 2,5, eine Säurezahl von 0,2 bis 1,9 mg KOH/g und ein Molekulargewicht von 1000 bis 3000 auf, wobei in Abhängigkeit von diesen Kennwerten sich eine OH-Zahl im Bereich von 35 bis 115 mg KOH/g einstellt. Die Viskosität bei 25°C beträgt üblicherweise 20000 bis 35000 mPas. Bevorzugt sind zweifunktionale Ester mit einer Säurezahl von 0,3 bis 1,0 mg KOH/g, einer OH-Zahl von 50 bis 60 mg KOH/g und einer Viskosität bei 25°C von 25000 bis 35000 mPas.

Das so hergestellte Polyesterpolyol führt auch als Bestandteil von wasserhaltigen Abmischungen von PUR-A-Komponenten, z. B. für den Einsatz im Kartuschenschaum, nicht zu Ausflockungen.

Die erfindungsgemäß hergestellten Polyesterpolyole können bei Bedarf einer üblichen Nachbehandlung unterzogen werden.

Die Polyesterpolyole werden, gegebenenfalls im Gemisch mit weiteren höhermolekularen Verbindungen mit mindestens zwei reaktiven Wasserstoffatomen, auf übliche Art und Weise mit organischen und/oder modifizierten organischen Di- und/oder Polyisocyanaten und weiteren üblichen Komponenten zu PUR, insbesondere Bau- und Montageschäumen, umgesetzt.

Ausführungen zu den bei der PUR-Herstellung auf Basis von Polyesterpolyolen üblicherweise verwendeten Ausgangsstoffen, den Reaktionsbedingungen und den Eigenschaften der Produkte sind in der Fach- und Patentliteratur enthalten. Beispielhaft genannt sei das weiter oben bereits zitierte Kunststoffhandbuch, Band VII, Polyurethane, Carl-Hanser-Verlag, München.

Die mit den erfindungsgemäßen Polyesterpolyolen hergestellten Bau- und Montageschäume, besonders bevorzugt Aerosol- oder Kartuschenschäume, weisen bei einem gleichbleibenden mechanischen Eigenschaftsniveau ein gutes Aushärteverhalten, eine hohe Standfestigkeit und eine vorteilhafte Dimensionsstabilität auf.

Die Aerosolschäume als Einkomponenten-PUR-Schäume aus Aerosolbehältern sind im Bereich des Bauwesens wie oben erwähnt häufig angewandte Montagemittel zum Einbau von Fenstern und Türen in Bauwerken sowie zum Füllen von bautechnisch bedingten Hohlräumen oder Mauerdurchbrüchen für Rohrinstallationen. Ein solcher Aerosolbehälter beinhaltet ein NCO-terminiertes PUR-Prepolymer sowie Treibmittel und Zusätze. Durch Austragen seines Inhaltes mittels Treibmittel, seinem Aufschäumen durch Frothwirkung und durch seine Aushärtung mit Luftfeuchtigkeit, entsteht der gewünschte Schaum. Die Herstellung von PUR-Einkomponentenschäumen aus Aerosolbehältern bzw. aus je nach Anwendungsform mit unterschiedlichen Ventilen versehenen Druckbehältern, welche die VCO-terminierten PUR-Prepolymere sowie Treibmittel und Zusätze enthalten, ist hinreichend bekannt. Die dabei angewandten Verfahren der Herstellung von NCO-semiprepolyrmeren in Aerosolbehältern, als Vorstufe zur Erzeugung von Einkomponentenschäumen aus diesen, sind ebenfalls allgemein bekannt und es wird auch heute noch nach diesem Grundprinzip verfahren. Ein Gemisch aus hydroxyfunktionellen Verbindungen, dessen Bestandteil in der hier beschriebenen Ausführungsform u. a. das erfindungsgemäße Polyesterpolyol ist, Katalysatoren, Stabilisatoren und gegebenenfalls weitere übliche Bestandteile, wie Flammschutzmittel, Weichmacher usw., bilden eine Ausgangskomponente, üblicherweise Polyolkomponente genannt. Die zweite Ausgangskomponente ist das Isocyanat, vorzugsweise das Rohprodukt des Diphenylmethandiisocyanats (Roh-MDI), üblicherweise als Isocyanatkomponente bezeichnet. Über eine geeignete Dosieranlage werden beide Ausgangskomponenten im gewünschten Verhältnis (Isocyanatüberschuß) in die zu befüllenden Aerosoldosen eingetragen. Dies kann entweder als Einzelkomponenten oder schon als fertiges Gemisch aus einer entsprechenden Mischvorrichtung erfolgen. Die so mit reagierenden Ausgangskomponenten gefüllten Dosen durchlaufen eine Verschlußeinrichtung (Aufbringen der Austragsventile) und werden unmittelbar darauf mit dem Treibgas oder Treibgasgemisch aufgefüllt. In einer Taumel- oder Schüttelanlage werden das sich bildende PUR-Prepolymer und die Treibgase intensiv miteinander gemischt. Als Ergebnis der Reaktion liegt ein PUR-Prepolymer gelöst im Flüssiggas als Treibmittel vor.

Die neben den Aerosolschäumen besonders bevorzugte Anwendungsform des erfindungsgemäßen Polyesterpolyols sind die Kartuschenschäume. Hierbei handelt es sich um eine Art von Montageschäumen, deren charakteristischer Systemaufbau und Anwendungsmerkmale wie folgt beschrieben werden können:

Kartuschenschäume sind zweikomponentige Formulierungen, bei denen ein Gemisch aus hydroxyfunktionellen Verbindungen, dessen Bestandteil in der hier beschriebenen Ausführungsform u.a. das erfindungsgemäße Polyesterpolyol ist, Katalysatoren, Stabilisatoren und gegebenenfalls weitere übliche Bestandteile, wie Flammschutzmittel, Weichmacher usw., eine Ausgangskomponente, üblicherweise Polyolkomponente genannt, bildet. Diese Polyolkomponente wird durch rheologische Zusätze, insbesondere pyrogene Kieselsäure, in einen leicht- bis hochpastösen Zustand versetzt.

Das zum System gehörende Isocyanat, vorzugsweise Roh-MDI, üblicherweise als Isocyanatkomponente bezeichnet, wird ebenfalls durch rheologische Zusätze, insbesondere pyrogene Kieselsäure, in einen leicht- bis hochpastösen Zustand versetzt. Beide pastösen Komponenten werden in vorzugsweise parallel angeordnete zylindrische Behältnisse, sogenannte Kartuschen, eingefüllt und durch bewegliche Stempel verschlossen. Durch synchronen Austrag der pastösen Komponenten bei gleichzeitiger Vermischung über einen Statikmischer entsteht ein Reaktionsgemisch, welches unmittelbar nach Verlassen des Mischkopfes aufschäumt und als solches das zu füllende Volumen ausfüllt und innerhalb weniger Sekunden zu einem festen Schaum aushärtet.

Die Erfindung wird in den nachfolgenden Ausführungsbeispielen näher erläutert.

### Beispiel 1 (erfindungsgemäß)

| | |
|---|---|
| 337,4 g | Dicarbonsäure-Gemisch (27 Masse-% Bernsteinsäure, 47 Masse-% Glutarsäure und 26 Masse-% Adipinsäure enthaltend) |
| | |
| 583,8 g | Diethylenglykol/Ester-Gemisch (45,2 Masse-% Diethylenglykoladipat enthaltend) |
| | |
| 168,7 g | PET (Feinanteil aus der Flaschenrecyclierung) |

wurden in ein beheizbares Reaktionsgefäß mit Rührwerk und aufgesetzter Destillationskolonne zur Entfernung des freiwerdenden Reaktionswassers gegeben und nach dem Aufheizen auf 225°C, wobei ständig gerührt wurde, 8 Stunden unter Stickstoff bei Normaldruck verestert. Nach Zugabe von 5 ppm Titantetrabutylat bei einer Säurezahl von 15 mg KOH/g und weiterer Polykondensation bei 0,017 MPa, während der nochmals je 5 ppm Titantetrabutylat bei Säurezahlen von 10, 8 und 5 mg KOH/g zugegeben wurden, erhielt man einen Polyesterpolyol mit folgenden Kennwerten:

| | |
|---|---|
| OH-Zahl | = 58,4 mg KOH/g |
| Säurezahl | = 0,83 mg KOH/g |
| Viskosität^{25°C} | = 24573 mPas |

### Beispiel 2 (erfindungsgemäß)

In einer Laborrührapparatur wurden

| | |
|---|---|
| 674,0 g | Dicarbonsäure-Gemisch (24 Masse-% Bernsteinsäure, 39 Masse-% Glutarsäure und 37 Masse-% Adipinsäure enthaltend), |
| | |
| 1168,0 g | Diethylenglykol/Ester-Gemisch (49,5 Masse-% Diethylenglykoladipat enthaltend) und |
| | |
| 338,0 g | PET-Schnitzel, grün (aus der Flaschenrecyclierung) |

unter kräftigem Rühren auf 230°C aufgeheizt. Über eine Zeit von 5,5 Stunden wurden unter Stickstoff und bei Normaldruck die PET-Schnitzel gelöst und gleichzeitig die Kondensation bis zu einer Säurezahl von 10 mg KOH/g geführt. Nach Zugabe von 30 ppm Titantetrabutylat wurde die Reaktion unter Anlegen von Vakuum bis 0,010 MPa solange fortgeführt, bis eine Säurezahl kleiner als 0,5 mg KOH/g erreicht wurde.

Das bei Raumtemperatur leicht trübe Polyesterpolyol wies folgende Kennwerte auf:

| | |
|---|---|
| OH-Zahl | = 57,5 mg KOH/g |
| Säurezahl | = 0,43 mg KOH/g |
| Viskosität^{25°C} | = 24225 mPas |
| Wassergehalt | =0,017 Masse-% |

### Beispiel 3 (erfindungsgemäß)

In einem 25 l Rührreaktor wurden

| | |
|---|---|
| 6,78 kg | Dicarbonsäure-Gemisch (29,5 Masse-% Bernsteinsäure, 45 Masse-% Glutarsäure und 25,5 Masse-% Adipinsäure enthaltend), |
| | |
| 11,92 kg | Diethylenglykol/Ester-Gemisch (42 Masse-% Diethylenglykoladipat enthaltend) und |
| | |
| 5,08 kg | PET-Schnitzel, weiß (aus der Flaschenrecyclierung) |

unter kräftigem Rühren auf 210°C aufgeheizt. Über eine Zeit von 10 Stunden wurden unter Stickstoff und bei Normaldruck die PET-Schnitzel gelöst und gleichzeitig die Kondensation bis zu einer Säurezahl von 17 mg KOH/g geführt. Danach erfolgte die Zugabe von 10 ppm Titantetrabutylat. Unter Anlegen von Vakuum bis 0,008 MPa und einer weiteren Zugabe von 10 ppm Titantetrabutylat bei einer Säurezahl von 5 mg KOH/g wurde die Polykondensation solange fortgerührt, bis eine Säurezahl kleiner als 0,3 mg KOH/g erreicht wurde.

Das so hergestellte Polyesterpolyol wies folgende Kennwerte auf:

| | |
|---|---|
| OH-Zahl | = 55,0 mg KOH/g |
| Säurezahl | = 0,27 mg KOH/g |
| Viskosität^{25°C} | = 33035 mPas |
| Wassergehalt | =0,04 Masse-% |

### Beispiel 4 (Vergleich)

In einer 2 l Laborrührapparatur wurden

| | |
|---|---|
| 374,7 g | Adipinsäure |
| 343,0 g | Diethylenglykol |
| 374,7 g | PET (Flaschenrecyclat) |

vorgelegt und unter Rühren und einer Temperaturerhöhung auf 220°C unter Normaldruck polykondensiert. Nach einer Reaktionszeit von 21 Stunden war das Recyclat vollständig gelöst. Das Reaktionsgemisch wies eine Säurezahl von 25,1 mg KOH/g auf. Durch Hinzufügen von 10 ppm Titantetrabutylat wurde die Reaktion katalysiert; eine weitere Portion von 10 ppm Titantetrabutylat wurde bei einer Säurezahl von 3,6 mg KOH/g hinzugefügt. Nach einer Reaktionszeit von 56 Stunden war ein Polyesterpolyol mit folgenden Kennwerten entstanden:

| | |
|---|---|
| OH-Zahl | = 76,2 mg KOH/g |
| Säurezahl | = 0,43 mg KOH/g |
| Viskosität^{25°C} | = 45500 mPas |

Das Produkt wurde bei Raumtemperatur trüb und wies nach einem Tag Absetzerscheinungen größerer Flocken auf. Es konnte nicht zu PUR-Schaum verarbeitet werden.

### Beispiel 5

### Herstellung und Prüfung eines Aerosolschaumes

### 5.1. Herstellung der Polyolkomponente

In einen Mischbehälter wurden nacheinander 400 g des Polyols nach Ausführungsbeispiel 1, 55 g eines Polyetherols auf Basis Saccharose/Pentaerythrit/Propylenoxid mit einer OH-Zahl von 410 mg KOH/g, 108 g eines Polyetherols auf Basis Glyzerin/Propylenoxid/Ethylenoxid mit einer OH-Zahl von 35 mg KOH/g, 45 g eines Polyethylenglykols mit einem Molekulargewicht von 600, 25 g eines Siloxanoxyalkylencopolymeren als Schaumstabilisator, 8 g Dimorpholinodiethylether, 99 g 4-Methyl-4-hydroxy-pentan-2-on sowie 260 g Trichlorpropylphosphat eingewogen und durch nachfolgende gründliche Durchmischung zu einer Polyolkomponente homogenisiert.

### 5.2. Herstellung des Aerosolschaumes

272 g der oben beschriebenen Polyolkomponente wurden in eine 1-Liter-Aerosoldose eingefüllt. Nach Zugabe von 404 g eines Rohproduktes des 4,4-Diphenylmethandiisocyanats (Roh-MDI) wurde die Aerosoldose mit einem Pistolenventil verschlossen. Sofort nach dem Verschließen wurden durch das Ventil mittels einer Gasdosiervorrichtung nacheinander 46 g Dimethylether, 84 g Tetrafluorethan und 28 g eines aus 80 Gew.-% Butan und 20 Gew.-% Propan bestehenden Gasgemisches in die Aerosoldose gefüllt. Nach der Dosierung wurde der Inhalt der Aerosoldose durch intensives Schütteln homogenisiert. Nach 24 Stunden Wärmelagerung bei 50°C war die Polymerreaktion soweit abgeschlossen, daß die Aerosoldose zur Herstellung des erfindungsgemäß verbesserten Schaumes geeignet war.

### 5.3.Testung des Aerosolschaumes

Die wie beschrieben hergestellte Aerosoldose wurde mittels aufgebrachten Gewinderinges auf eine Schäumpistole aufgeschraubt. Durch Betätigung der Schäumpistole wurde der Inhalt der Aerosoldose ausgetragen. Es war festzustellen, daß der austretende Schaum ein sehr verstärktes Frothverhalten aufwies. Zwecks Testung auf Standfestigkeit wurde ein senkrechter Spalt von 5 cm Breite von unten nach oben aufbauend mit dem noch frischen Schaumgemisch ausgeschäumt. Der Schaum wies eine hohe Standfestigkeit auf, da sich der 5-cm-Montagespalt bis in jede beliebige Höhe füllen ließ, ohne daß das Schaumgemisch aus dem Spalt fiel.

Zwecks Testung auf Dimensionsstabilität wurde der Schaum zwischen zwei Spanplatten von 250x115x20 mm, welche durch 20 mm Distanzhölzer getrennt waren, geschäumt. Man ließ den Schaum aushärten, schnitt den überstehenden Schaum ab und entfernte nach 24 Stunden die Distanzhölzer. Der Abstand der Spanplatten zueinander wurde an allen vier Ecken gemessen und notiert. Nach 14-tägiger Lagerung bei 40°C und 90 % relativer Feuchte wurde die Abstandsmessung wiederholt. Die Dimensionsstabilität wird gemessen bzw. berechnet, indem man die Summen der jeweiligen Messung ermittelt und deren Änderung prozentual errechnet. Der so geprüfte Schaum wies einen Schrumpf von 4,8 % auf. Laut Prüfnorm gilt ein Schaum als dimensionsstabil, wenn er unter den angegebenen Prüfbedingungen einen Schrumpf von kleiner 10 % aufweist.

### Beispiel 6

### Herstellung des Kartuschenschaumes

### 6.1. Herstellung der Polyolkomponente

Aus 260 g eines Recyclingpolyesterpolyols nach Beispiel 1, 103 g eines Aminpolyols auf der Basis von Ethylendiamin/Propylenoxid mit einem Molekulargewicht von 290, 135 g eines Polyetherpolyols auf Basis von Sorbit/Propylenoxid mit einem Molekulargewicht von 660, 160 g eines Polyetherpolyols auf der Basis von Glyzerin/Propylenoxid/Ethylenoxid mit einem Molekulargewicht von 4800, 260 g Trichlorpropylphosphat, 10 g eines Silikon-Stabilisators, 7 g Bis-(dimethylaminoethyl)ether 70 %ig in Dipropylenglykol, 7 g N,N,N,N,N-Pentamethyldiethylentriamin und 28 g Wasser wurde in einem Labormischer nach gründlicher Durchmischung eine Emulsion hergestellt. Dem Mischer wurden nachfolgend bei laufendem Rührwerk zuerst 15 g pyrogene Kieselsäure zugegeben. Nach gründlicher Homogenisierung erfolgte damit eine Stabilisierung der Emulsion. Die weitere Zugabe von 15 g eines modifizierten hydrierten Rizinusölderivates vervollständigte die Polyolkomponente.

### 6.2. Herstellung des Kartuschenschaumes

100 g der oben beschriebenen Polyolkomponente wurden in einen Zylinder der Doppelzylinder aufweisenden Kartusche mit aufgesetztem Statikmischer eingefüllt. Der zweite Zylinder wurde gleichfalls mit 100 g thixotropiertem Roh-MDI gefüllt. Zu diesem Zweck wurden 970 g Roh-MDI mit 30 g pyrogener Kieselsäure vermischt und die erforderliche Teilmenge entnommen. Nach der Füllung beider Zylinder und Einsetzen der Entleerungsstempel war der Kartuschenschaum verarbeitungsbereit. Mit Hilfe der Entleerungsstempel wurden die Polyol- und Isocyanatkomponenten synchron über den Statikmischer entleert. Das Reaktionsgemisch schäumte unmittelbar nach verlassen des Statikmischers auf und härtete zu einem schrumpfungsfreien, sehr feinzelligen Schaum aus.

### 6.3. Testung des Kartuschenschaumes

Bei der Prüfung auf Dimensionsstabilität, analog wie bei Beispiel 5 beschrieben, jedoch bei Lagerung des Prüfkörpers bei Raumtemperatur, wies der Kartuschenschaum einen Schrumpf von 0,78 % auf und war damit nahezu schrumpffrei.

## Patentansprüche

1. Verfahren zur Herstellung von Polyesterpolyolen auf Basis von Alkoholen und Carbonsäuren und/oder Carbonsäurederivaten sowie Polyalkylenterephthalat, **dadurch gekennzeichnet, dass** für die Polykondensation eine Rohstoffkombination, enthaltend
a) ein Gemisch (I) aus einem oder mehreren Alkoholen mit mindestens zwei Hydroxylgruppen und 30 bis 60 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen,
b) ein Gemisch (II) aus 10 bis 33 Masse-% Bernsteinsäure, 39 bis 55 Masse-% Glutarsäure und 18 bis 45 Masse-% Adipinsäure und
c) Polyalkylenterephthalat,
eingesetzt wird und das Verhältnis der Bestandteile a) zu b) zu c) in Masse-% (50 bis 60) zu (25 bis 40) zu (15 bis 25) beträgt, wobei sich die Anteile auf 100 Masse-% ergänzen.

2. Verfahren nach Anspruch 1, **dadurch gekennzeichnet, dass** das Gemisch (I) als Alkohol mit mindestens zwei Hydroxylgruppen Diethylenglykol enthält.

3. Verfahren nach Anspruch 1 oder 2, **dadurch gekennzeichnet, dass** das Gemisch (I) als lineare Alkandiolester von aliphatischen C₂- bis C₄-Dicarbonsäuren mit einem mittleren Estermolekulargewicht von bis zu 500 und/oder cyclische Esterverbindungen Diethylenglykoladipate enthält.

4. Verfahren nach einem der Ansprüche 1 bis 3, **dadurch gekennzeichnet, dass** der Anteil des cyclischen Esters im Gemisch (I) 40 bis 48 Masse-% beträgt.

5. Verfahren nach einem der Ansprüche 1 bis 3, **dadurch gekennzeichnet, dass** das Dicarbonsäuregemisch (II) aus 17 bis 30 Masse-% Bernsteinsäure, 39 bis 47 Masse-% Glutarsäure und 25 bis 38 Masse-% Adipinsäure besteht.

6. Verfahren nach einem der Ansprüche 1 bis 4, **dadurch gekennzeichnet, dass** als Polyalkylenterephthalat Polyethylenterephthalat und/oder Polybutylenterephthalat eingesetzt werden.

7. Verfahren nach einem der Ansprüche 1 bis 5, **dadurch gekennzeichnet, dass** das Verhältnis der Bestandteile a) zu b) zu c) in Masse-% (50 bis 59) zu (25 bis 35) zu (15 bis 25) beträgt, wobei sich die Anteile auf 100 Masse-% ergänzen.

8. Verfahren nach einem der Ansprüche 1 bis 6, **dadurch gekennzeichnet, dass** die Reaktionsführung gezielt in einem Syntheseschritt erfolgt.

9. Verfahren nach einem der Ansprüche 1 bis 7, **dadurch gekennzeichnet, dass** die Polykondensation nach Vorlage aller Ausgangsstoffe bei Temperaturen von 180 bis 250°C unter Normaldruck solange erfolgt, bis ein homogenes Reaktionsgemisch entsteht, und danach die weitere Veresterung bis zum Erreichen der angestrebten Kenndaten unter vermindertem Druck durchgeführt wird.

10. Verwendung der nach einem der Ansprüche 1 bis 8 hergestellten Polyesterpolyole zur Herstellung von Polyurethanen, insbesondere für Bau- und Montageschäume.

## Claims

1. A process for preparing polyester polyols on the basis of alcohols and carboxylic acids and/or carboxylic acid derivatives plus polyalkylene terephthalate, wherein the polycondensation is carried out using a raw material combination comprising
a) a mixture (I) of one or more alcohols having at least two hydroxyl groups and from 30 to 60% by mass of one or more linear alkanediol esters of aliphatic C₂-C₄-dicarboxylic acids having a mean ester molecular weight of up to 500 and/or cyclic ester compounds,
b) a mixture (II) of from 10 to 33% by mass of succinic acid, from 39 to 55% by mass of glutaric acid and from 18 to 45% by mass of adipic acid and
c) polyalkylene terephthalate,
and the mass ratio of the constituents a) to b) to c) is (50-60):(25-40):(15-25), where the'proportions add up to 100% by mass.

2. A process as claimed in claim 1, wherein the mixture (I) comprises diethylene glycol as alcohol having at least two hydroxyl groups.

3. A process as claimed in claim 1 or 2, wherein the mixture (I) comprises diethylene glycol adipates as linear alkanediol esters of aliphatic C₂-C₄-dicarboxylic acids having a mean ester molecular weight of up to 500 and/or cyclic ester compounds.

4. A process as claimed in any of claims 1 to 3, wherein the proportion of cyclic ester in mixture (I) is from 40 to 48% by mass.

5. A process as claimed in any of claims 1 to 3, wherein the dicarboxylic acid mixture (II) comprises from 17 to 30% by mass of succinic acid, from 39 to 47% by mass of glutaric acid and from 25 to 38% by mass of adipic acid.

6. A process as claimed in any of claims 1 to 4, wherein polyethylene terephthalate and/or polybutylene terephthalate are used as polyalkylene terephthalate.

7. A process as claimed in any of claims 1 to 5, wherein the mass ratio of the constituents a) to b) to c) is (50-59):(25-35):(15-25), where the proportions add up to 100% by mass.

8. A process as claimed in any of claims 1 to 6, wherein the reaction is carried out in a targeted manner in one synthetic step.

9. A process as claimed in any of claims 1 to 7, wherein, after charging of all starting materials, the polycondensation is carried out at from 180 to 250°C under atmospheric pressure until a homogeneous reaction mixture is formed and the further esterification is then carried out under reduced pressure until the desired properties have been obtained.

10. The use of a polyester polyol prepared as claimed in any of claims 1 to 8 for producing polyurethanes, in particular building and installation foams.

## Revendications

1. Procédé de préparation de polyesterpolyols à base d'alcools et d'acides carboxyliques et/ou de dérivés d'acides carboxyliques ainsi que de téréphtalate de polyalkylène, **caractérisé en ce que**, pour la polycondensation, on utilise une combinaison de matières premières, contenant
a) un mélange (I) d'un ou de plusieurs alcools comportant au moins deux groupes hydroxy et de 30 à 60% en masse d'un ou de plusieurs esters d'alcanediols linéaires et d'acides dicarboxyliques aliphatiques en C₂-C₄ ayant un poids moléculaire d'ester moyen de jusqu'à 500 et/ou de composés ester cycliques,
b) un mélange (II) de 10 à 33% en masse d'acide succinique, de 39 à 55% en masse d'acide glutarique et de 18 à 45% en masse d'acide adipique, et
c) du téréphtalate de polyalkylène,
et **en ce que** le rapport entre les composants a) et b) et c) en % en masse est de (50 à 60)/(25 à 40)/(15 à 25), les proportions donnant 100% en masse.

2. Procédé suivant la revendication 1, **caractérisé en ce que** le mélange (I) contient du diéthylèneglycol comme alcool comportant au moins deux groupes hydroxy.

3. Procédé suivant la revendication 1 ou 2, **caractérisé en ce que** le mélange (I) contient des adipates de diéthylèneglycol à titre d'esters d'alcanediols linéaires d'acides dicarboxyliques aliphatiques en C₂-C₄ ayant un poids moléculaire d'ester moyen allant jusqu'à 500 et/ou des composés ester cycliques.

4. Procédé suivant l'une des revendications 1 à 3, **caractérisé en ce que** la proportion de l'ester cyclique dans le mélange (I) est de 40 à 48% en masse.

5. Procédé suivant l'une des revendications 1 à 3, **caractérisé en ce que** le mélange d'acides dicarboxyliques (II) est constitué de 17 à 30% en masse d'acide succinique, de 39 à 47% en masse d'acide glutarique et de 25 à 38% en masse d'acide adipique.

6. Procédé suivant l'une des revendications 1 à 4, **caractérisé en ce que**, comme téréphtalate de polyalkylène, on met en oeuvre du téréphtalate de polyéthylène et/ou du téréphtalate de polybutylène.

7. Procédé suivant l'une des revendications 1 à 5, **caractérisé en ce que** le rapport entre les composants a) et b) et c) en % en masse est de (50 à 59)/(25 à 35)/(15 à 25), les proportions donnant 100% en masse.

8. Procédé suivant l'une des revendications 1 à 6, **caractérisé en ce que** la conduite de la réaction a lieu de manière appropriée en une étape de synthèse.

9. Procédé suivant l'une des revendications 1 à 7, **caractérisé en ce que**, après mise en place de toutes les matières de départ, la polycondensation a lieu à des températures de 180 à 250°C sous pression normale jusqu'à l'obtention d'un mélange réactionnel homogène, et **en ce qu'**ensuite l'estérification ultérieure est effectuée sous pression réduite jusqu'à l'obtention des caractéristiques recherchées.

10. Utilisation des polyesterpolyols préparés suivant l'une des revendications 1 à 8, pour la fabrication de polyuréthannes, en particulier de mousses de construction et de montage.
